# EUROPÄISCHE PATENTSCHRIFT

(11) **EP 3 677 418 B1**
(45) Veröffentlichungstag und Bekanntmachung des Hinweises auf die Patenterteilung: **20.07.2022**
(21) Anmeldenummer: 19217452.2
(22) Anmeldetag: 18.12.2019
(51) Int. Cl.: B29D 99/00

(54) **RUMPFBAUTEIL FÜR EIN LUFTFAHRZEUG, VERFAHREN ZUR HERSTELLUNG EINES RUMPFBAUTEILS SOWIE LUFTFAHRZEUG**
FUSELAGE COMPONENT FOR AN AIRCRAFT, METHOD FOR PRODUCING A FUSELAGE COMPONENT AND AIRCRAFT
COMPOSANT DE FUSELAGE POUR AÉRONEF, PROCÉDÉ DE FABRICATION D'UN COMPOSANT DE FUSELAGE, AINSI QU'AÉRONEF

(30) Priorität: 20.12.2018 DE 102018222431
(43) Veröffentlichungstag der Anmeldung: 08.07.2020
(73) Patentinhaber: Premium AEROTEC GmbH, 86179 Augsburg (DE)
(72) Erfinder: KUNTZ, Julian, 86179 Augsburg (DE); GEIPEL, Thomas, 86343 Königsbrunn (DE)
(74) Vertreter: LKGLOBAL Lorenz & Kopf PartG mbB Patentanwälte

(56) Entgegenhaltungen:
- EP-A1- 3 205 491
- EP-A2- 0 749 825
- DE-A1-102011 085 937

## Beschreibung

Die vorliegende Erfindung betrifft ein Verfahren zur Herstellung eines Rumpfbauteils für ein Luftfahrzeug, ein Rumpfbauteil für ein Luftfahrzeug sowie ein Luftfahrzeug.

Zur Herstellung einer Rumpfstruktur eins Luftfahrzeugs werden häufig schalenförmige Bauteile aus einem Faserverbundmaterial verwendet. Diese Bauteile weisen typischerweise ein sich flächig erstreckendes Schalenteil oder Hautelement sowie mit dem Schalenteil verbundene Versteifungsprofile auf, welche eine gitterförmige Versteifungsstruktur ausbilden. Hierbei, d. h. wenn solche Bauteile in Faserverbundbauweise realisiert werden, sind zumeist sowohl das Schalenteil als auch die Versteifungsprofile aus einem Faserverbundmaterial gebildet.

Zur Herstellung derartiger Bauteile schlägt die DE 10 2009 057 006 A1 ein Verfahren vor, bei dem zunächst Streifenelemente aus einem Fasermaterial in an einem Formwerkzeugteil ausgebildete Nuten eingelegt werden, wobei die Nuten korrespondierend zu einer herzustellenden Gitterform der Versteifungsstruktur verlaufen. An Kreuzungsstellen der Nuten, an denen sich jeweils zwei Nuten kreuzen, enden die jeweiligen Streifenelemente und es wird ein die jeweiligen Streifenelemente verbindendes Kreuzungsteil eingesetzt. Ein flächiges Faserhalbzeug wird auf dem Formwerkzeugteil ausgebildet, indem Faserbänder mittels eines AFP-Prozesses ("AFP" steht als Abkürzung für den englischen Ausdruck "Automated Fiber Placement") abgelegt werden. Anschließend wird eine Druckplatte auf das Faserhalbzeug aufgelegt und es erfolgt ein Infiltrieren des Faserhalbzeugs und der Streifenelemente mit einem Matrixmaterial sowie ein Aushärten des Matrixmaterials.

Die DE 10 2006 048 668 A1 beschreibt ein Verfahren zur Herstellung von Strukturbauteilen mit einem flächigen Hautfeld und einer auf dem Hautfeld aufgebrachten Versteifungsstruktur, wobei die Versteifungsstruktur mindestens zwei Versteifungsprofile aus einem Faserverbundmaterial aufweist, welche einen gemeinsamen Schnittpunkt haben. Hierbei werden die Versteifungsprofile auf das Hautfeld drapiert, wobei Übergangsflächen ausgebildet werden, die so gestaltet sind, dass eine durchgängige und kraftflussgerechte Anordnung von Verstärkungsfasern ermöglicht wird.

Die US 2009/0320398 A1 beschreibt ein Verfahren zur Herstellung eines Strukturbauteils für ein Luftfahrzeug, wobei Kreuzungsstellen einer gitterförmigen Verstärkungsstruktur durch vier Teilprofile zusammengesetzt werden. Zur Verbesserung der Lastübertragung über die Kreuzungsstelle hinweg sind Bandelemente vorgesehen, welche sich über die Kreuzungsstellen hinweg erstrecken.

Die US 6 110 567 A beschreibt außerdem ein Faserverbundbauteil mit einem flächigen Schalenteil und einer Versteifungsstruktur mit sich kreuzenden Ω-förmigen Versteifungsprofilen, wobei die Versteifungsstruktur als Ganzes mit dem Schalenteil verklebt wird.

Die EP 0 749 825 A2 beschreibt gemäß Zusammenfassung die Herstellung eines kastenförmigen Faservorformlings durch Aufeinanderlegen oder Übereinanderlegen mehrerer Verstärkungsfasermaterialschichten in eine kastenartigen Form. Der kastenförmige faserige Vorformling wird als Hilfselement oder durch Schneiden des kastenförmigen Elements in Segmente einer erforderlichen Form verwendet. Das Hilfselement wird mit verstärkendem Fasermaterial kombiniert, das ein Hauptstrukturelement bildet. Das Hilfselement und das Hauptstrukturelement werden in eine Form eingebracht und ein Harz wird in die Form zugeführt, um einen Harzimprägnierungs- und Härtungsvorgang durchzuführen.

Die EP 3 205 491 A1 beschreibt gemäß Zusammenfassung ein Verfahren zur Herstellung einer versteiften Platte aus Verbundmaterial, umfassend eine Haut und längliche Verstärkungselemente, wobei einige der länglichen Verstärkungselemente einander kreuzen, wobei das Verfahren die folgende Schritte aufweist: a) Auflegen eines flachen Laminats aus gestapelten Lagen einer Verbundschicht zum Bilden einer Struktur aufweisend die länglichen Verstärkungselemente der Platte, b) Schneiden des flachen Laminats entlang der Schnittlinien der Ebenen, welche die Bahnen von zwei sich kreuzenden Verstärkungselementen definieren, c) Schneiden des Umrisses der länglichen Verstärkungselemente in das flache Laminat, d) Bilden der Struktur, welche die länglichen Verstärkungselemente des Paneels aufweisen, e) Auflegen von Lagen an Verbundschicht zum Bilden der Haut, f) Aushärten der aufgelegten Lagen der Haut und der geformten Struktur, welche die länglichen Verstärkungselemente umfasst.

Die DE 10 2011 085 937 A1 beschreibt gemäß Zusammenfassung eine Leichtbaustruktur, insbesondere eine Flugzeugprimärstruktur oder untergeordnete Baugruppe. Die Leichtbaustruktur ist zumindest bereichsweise mit einer Vielzahl von verbundenen Mosaikelementen und/oder Hautmosaikelementen gebildet. Die Leichtbaustruktur ermöglicht unter anderem eine im Wesentlichen belastungsgerechte Anordnung der Mosaikelemente und/oder der Hautmosaikelemente einschließlich der optionalen Haut. Hiermit lässt sich beispielsweise eine spant- und stringerfreie Flugzeugrumpfzelle mit einer signifikant höheren mechanischen Belastbarkeit bei einem zugleich verringerten Gewicht schaffen. Darüber hinaus erfordert die Leichtbaustruktur eine deutlich verringerte Anzahl von Verbindungselementen, insbesondere von Nieten oder Bolzen, wodurch sich der Montageaufwand verringert und weitere Gewichtsreduktionen ermöglicht werden. Daneben hat die Erfindung zwei Verfahrensvarianten zur Herstellung einer Leichtbaustruktur zum Gegenstand. Verfahrensgemäß lassen sich auch großformatige Leichtbaustrukturen, wie zum Beispiel eine Flugzeugrumpfzelle oder Teilschalen hiervon, prozesssicher und maßhaltig fertigen, da nur Mosaikelemente bzw. Hautmosaikelemente mit relativ kleinen Abmessungen zu handhaben sind. Weitere Anwendungen der Leichtbaustruktur sind unter anderem Trägerraketen, Raketenstufen, Raumstationen, Raumstationsmodule, Satelliten und Masten bzw. Türme von Windkraftanlagen.

Es ist Aufgabe der vorliegenden Erfindung, ein Rumpfbauteil für ein Luftfahrzeug, das sich in einfacher und effizienter Weise herstellen lässt, sowie ein verbessertes Herstellungsverfahren für ein Rumpfbauteil bereitzustellen.

Diese Aufgabe wird jeweils durch die Gegenstände der unabhängigen Ansprüche gelöst.

Vorteilhafte Ausgestaltungen und Weiterbildungen ergeben sich aus den auf die unabhängigen Ansprüche rückbezogenen Unteransprüchen in Verbindung mit der Beschreibung.

Nach einem ersten Aspekt der Erfindung ist ein Rumpfbauteil für ein Luftfahrzeug vorgesehen. Das Rumpfbauteil weist ein sich flächig erstreckendes Schalenteil aus einem Faserverbundmaterial und eine mit einer Innenfläche des Schalenteils verbundene Versteifungsstruktur auf. Die Versteifungsstruktur weist eine Vielzahl von Formteilen aus einem Faserverbundmaterial auf. Die Formteile weisen jeweils einen flächigen, beispielsweise polygonförmigen Basisabschnitt, welcher sich entlang der Innenfläche des Schalenteils erstreckt, und einen stufenförmigen Profilrand auf, der sich umlaufend um den Basisabschnitt erstreckt. Die Formteile sind in Form einer Parkettierung mit sich überlappenden Profilrändern angeordnet, wobei die sich überlappenden Profilränder sich an einer Kreuzungsstelle kreuzende Versteifungsprofile ausbilden.

Eine der Ideen der vorliegenden Erfindungen besteht darin, eine Versteifungsstruktur aus einer Vielzahl von wannenförmigen, z.B. rechteckigen Formteilen auszubilden, wobei sich stufenförmige Randbereiche aneinander angrenzender Formteile überlappen. Durch die Überlappung von jeweils zwei stufenförmigen Randbereichen wird eine Querschnittsform, insbesondere eine Ω-förmige Querschnittsform eines jeweiligen Versteifungsprofils definiert. Durch eine Anordnung der Formteile als Parkettierung, das heißt als Anordnung lückenlos aneinander angrenzender Formteile, wobei die Randbereiche sich zumindest teilweise überdecken, wird eine Versteifungsstruktur mit sich kreuzenden Versteifungsprofilen ausgebildet. Eine derartige Versteifungsstruktur kann auf besonders einfache Weise hergestellt werden, da die Formteile jeweils gleich aufgebaut sind. Die Kreuzungsstellen werden ebenfalls durch Überlappung der Profilabschnitte gebildet und können dadurch sehr effizient hergestellt werden.

Gemäß einer Ausführungsform des Rumpfbauteils ist mit jedem Versteifungsprofil jeweils ein Lastband verbunden, welches sich über die Kreuzungsstelle hinweg erstreckt. Die Lastbänder sind aus einem Faserverbundmaterial gebildet und können beispielsweise unidirektional angeordnete Verstärkungsfasern aufweisen. Die Lastbänder sind zur zusätzlichen Versteifung über die Kreuzungsstellen hinweg vorgesehen. Insbesondere weisen die Lastbänder sich über die Kreuzungsstellen hinweg erstreckende in ein Matrixmaterial eingebettete Verstärkungsfasern auf. Dadurch wird die Lastübertragung über die Kreuzungsstellen hinweg verbessert.

Gemäß einer Ausführungsform des Rumpfbauteils sind die Basisabschnitte der Formteile rechteckförmig ausgebildet. Der Profilrand eines jeweiligen Formteils weist jeweils zwei einander gegenüberliegende erste Profilabschnitte auf, die sich in einer ersten Richtung erstrecken, und zwei einander gegenüberliegende zweite Profilabschnitte auf, die sich zwischen den ersten Profilabschnitten in einer zweiten Richtung erstrecken. Die ersten Profilabschnitte von jeweils zwei in der zweiten Richtung benachbarten Formteilen überlappen sich derart, dass diese ein sich in der ersten Richtung erstreckendes erstes Versteifungsprofil ausbilden. Ferner überlappen sich die zweiten Profilabschnitte von jeweils zwei in der ersten Richtung benachbarten Formteilen derart, dass diese ein sich in einer zweiten Richtung erstreckendes zweites Versteifungsprofil ausbilden, welches das erste Versteifungsprofil an einer Kreuzungsstelle kreuzt.

Optional ist jeweils ein Lastband mit den sich überlappenden ersten Profilabschnitten verbunden und erstreckt sich über die Kreuzungsstelle hinweg. Ferner ist jeweils ein Lastband mit den sich überlappenden zweiten Profilabschnitten verbunden und erstreckt über die Kreuzungsstelle hinweg. Die rechteckförmige Gestaltung der Basisabschnitte der Formteile erleichtert insbesondere die Herstellung der Formteile durch Umformung eines Faserhalbzeugs, was die Herstellung des Rumpfbauteils weiter erleichtert.

Gemäß einer Ausführungsform des Rumpfbauteils ist die Versteifungsstruktur zumindest bereichsweise mit mehreren übereinanderliegenden Lagen aus Formteilen gebildet, wobei sich die Profilränder benachbarter Formteile einer jeweiligen Lage überlappen, und wobei zwischen zwei benachbarten Lagen jeweils ein Lastband angeordnet ist, das sich auf den Profilrändern über die Kreuzungsstelle hinweg erstreckt. Demnach können auch mehrere Formteile übereinander zur Ausbildung mehrerer Lagen gestapelt angeordnet sein. Die zumindest bereichsweise mehrlagige Ausbildung der Versteifungsstruktur verbessert weiter die mechanische Festigkeit des Rumpfbauteils.

Zwischen den überlappenden Profilrändern einer Lage und den überlappenden Profilrändern einer darüber liegenden Lage ist optional jeweils zumindest ein Lastband angeordnet. Dadurch wird die Steifigkeit weiter vergrößert.

Gemäß einer weiteren Ausführungsform weist die Versteifungsstruktur eine flächige Abdecklage aus einem Faserverbundmaterial auf, wobei die Abdecklage an den Formteilen und gegebenenfalls optional an den Lastbändern anliegt und im Bereich der Kreuzungsstellen Ausnehmungen aufweist. Die Formteile sind also zwischen dem Schalenteil und der Abdecklage angeordnet, wobei die Abdecklage flächig an den Formteilen anliegt. Durch die Ausnehmungen der Abdecklage kann die Abdecklage einfacher an die Topographie der Formteile angepasst werden. Die Abdecklage bietet den Vorteil, dass die Lastbänder und die Formteile vor Beschädigungen geschützt werden.

Gemäß einer weiteren Ausführungsform weist das Rumpfbauteil einen Schaumkern auf, welcher zwischen den Versteifungsprofilen und dem Schalenteil angeordnet ist. Der Schaumkern füllt somit den durch die Profilabschnitte definierten Querschnitt der Versteifungsprofile aus. Dies erleichtert insbesondere die Herstellung des Rumpfbauteils. Ferner vergrößert der Schaumkern insgesamt die mechanische Festigkeit des Rumpfbauteils. Der Schaumkern kann einstückig ausgebildet oder aus mehreren Schaumkernteile zusammengesetzt sein.

Gemäß einer weiteren Ausführungsform weist das Rumpfbauteil eine mit einem der Versteifungsprofile verbundene Anschlussstruktur auf, welche eine von dem Versteifungsprofil vorspringende Lasche aufweist. Demnach ist an einem der Versteifungsprofile eine Struktur mit einer Lasche befestigt, welche zur Anbindung weiterer Bauteile, wie z.B. von Innenverkleidungsteilen oder dergleichen, dient. Die Anschlussstruktur kann beispielsweise aus einem Faserverbundmaterial gebildet sein. Zur Befestigung kann die Anschlussstruktur z.B. mit den Formteilen verklebt oder an diese angeformt sein.

Gemäß einer weiteren Ausführungsform weist das Rumpfbauteil einen mit der Innenfläche des Schalenteils verbundenen Verbindungsstreifen auf, welcher sich entlang eines Umfangsrands des Schalenteils erstreckt und über diesen vorspringt.

Der Verbindungsstreifen kann beispielsweise aus einem thermoplastischen Faserverbundmaterial gebildet sein oder ein thermoplastisches Material aufweisen.

Gemäß einer weiteren Ausführungsform weist das Rumpfbauteil eine mit einem der Versteifungsprofile verbundene Profilkopplungsstruktur, welche in Bezug auf die Längserstreckung des jeweiligen Versteifungsprofils über eine Ende des jeweiligen Versteifungsprofils hinausragt. Die Profilkopplungsstruktur ragt somit, je nachdem ob diese an einem ersten oder zweiten Versteifungsprofil angebracht ist, in der ersten oder der zweiten Richtung über ein Ende des jeweiligen Versteifungsprofils hinaus. Die Profilkopplungsstruktur dient der Kopplung von Versteifungsprofilen verschiedener Rumpfbauteile, z.B. in einer Rumpfstruktur eines Luftfahrzeugs.

Die Profilkopplungsstruktur kann beispielsweise als ein Streifen oder eine Lasche aus einem Faserverbundmaterial, z.B. einem thermoplastischen Faserverbundmaterial, gebildet sein und ist z.B. an das jeweilige Versteifungsprofil angeformt oder mit diesem verklebt.

Gemäß einem weiteren Aspekt der Erfindung ist ein Luftfahrzeug mit einem Rumpf vorgesehen, wobei der Rumpf zumindest ein Rumpfbauteil gemäß einer der voranstehend beschriebenen Ausführungsformen aufweist. Der Rumpf kann beispielsweise eine etwa zylinderförmige Querschnittsform aufweisen, die durch mehrere Rumpfbauteile ausgebildet wird, wobei die Innenfläche des Schalenteils eines jeweiligen Rumpfbauteils eine konkave Krümmung aufweist.

Gemäß einem weiteren Aspekt der Erfindung ist ein Verfahren zur Herstellung eines Rumpfbauteils vorgesehen. In einem Schritt des Verfahrens erfolgt ein Ausbilden einer Versteifungsstruktur aus einer Vielzahl von Formteilen aus einem Faserverbundmaterial bzw. Faserverbundhalbzeug, welche jeweils einen flächigen Basisabschnitt und einen stufenförmigen Profilrand aufweisen, wobei die Profilränder von jeweils zwei Formteilen derart überlappend angeordnet werden, dass diese ein Versteifungsprofil ausbilden. Weiter wird eine Innenfläche eines sich flächig erstreckenden Schalenteils aus einem Faserverbundmaterial an die Basisabschnitte der Formteile der Versteifungsstruktur angelegt und es erfolgt ein Verbinden des Schalenteils und der Versteifungsstruktur.

Diesem Aspekt der Erfindung liegt die Idee zugrunde, eine Versteifungsstruktur aus einer Vielzahl von flächigen Formteilen auszubilden, welche einen stufenförmigen Randbereich aufweisen, indem die Formteile so angeordnet werden, dass sich die Randbereiche von jeweils zwei Formteilen überlappen. Durch die Überlappung von zwei stufenförmigen Randbereichen bzw. von Profilrändern wird eine Querschnittsform, insbesondere eine Ω-förmige Querschnittsform eines jeweiligen Versteifungsprofils definiert. Auf diese Weise kann eine Versteifungsstruktur vorteilhaft aus einer Vielzahl gleicher die Formteile aufgebaut werden. Dies beschleunigt die Ausbildung der Versteifungsstruktur. Die so gebildete Versteifungsstruktur wird mit einem flächigen Schalenteil verbunden, insbesondere wird eine Innenfläche des Schalenteils an einen flächigen Basisabschnitt der Formteile angelegt und z.B. stoffschlüssig mit den Basisabschnitten verbunden. Durch die flächige Verbindung wird ein besonders stabiler Aufbau erzielt. Als Faserverbundmaterial bzw. Halbzeug können beispielsweise Prepreg-Halbzeuge verwendet werden, also Halbzeuge aus einem Faserverbundmaterial, bei welchem Verstärkungsfasern mit einem Matrixmaterial imprägniert bzw. in dieses bereits eingebettet sind. Alternativ können auch trockene Fasermatten als Halbzeug verwendet werden.

Gemäß einer Ausführungsform des Verfahrens erstreckt sich der Profilrand umlaufend um den Basisabschnitt, wobei die Formteile in Form einer Parkettierung derart angeordnet werden, dass sich Profilränder überlappen und sich an einer Kreuzungsstelle kreuzende Versteifungsprofile ausbilden. Optional wird mit jedem Versteifungsprofil jeweils ein Lastband verbunden, welches sich über die Kreuzungsstelle hinweg erstreckt. Demnach ist das Formteil als ein wannenförmiges Bauteil mit einem stufenförmigen Profilrand ausgebildet, der sich umlaufend um den Basisabschnitt erstreckt. Diese Gestaltung erlaubt eine Anordnung der Formteile in einer Parkettierung und dadurch die besonders schnelle und einfache Ausbildung von Kreuzungsstellen zwischen ersten und zweiten Versteifungsprofilen.

Gemäß einer Ausführungsform des Verfahrens sind die Basisabschnitte der Formteile rechteckförmig ausgebildet, wobei der Profilrand zwei einander gegenüberliegende erste Profilabschnitte, die sich in einer ersten Richtung erstrecken, und zwei einander gegenüberliegende zweite Profilabschnitte aufweisen, die sich zwischen den ersten Profilabschnitten in einer zweiten Richtung erstrecken, wobei die ersten Profilabschnitte von jeweils zwei Formteilen derart überlappend angeordnet werden, dass diese ein sich in der ersten Richtung erstreckendes erstes Versteifungsprofil ausbilden, wobei die zweiten Profilabschnitte von jeweils zwei Formteilen derart überlappend angeordnet werden, dass diese ein sich in der zweiten Richtung erstreckendes zweites Versteifungsprofil ausbilden, welches das erste Versteifungsprofil an der Kreuzungsstelle kreuzt. Optional werden mit den ersten Profilabschnitten und den zweiten Profilabschnitten jeweils sich über die Kreuzungsstellen hinweg erstreckende Lastbänder aus einem Faserverbundmaterial verbunden.

Gemäß einer weiteren Ausführungsform wird zur Stützung der Versteifungsstruktur ein Schaumkern zwischen den Versteifungsprofilen und dem Schalenteil angeordnet. Der Schaumkern erleichtert dadurch insbesondere das Verbinden der Formteile mit dem Schalenteil, da durch den Schaumkern Verformungen der Formteile, die beim Aufbringen einer Kraft zum Verbinden der Formteile mit dem Schalenteil auftreten können, vermieden werden. Wenn die Versteifungsprofile beispielsweise gemeinsam mit dem Schalenteil in einem Vakuumsack oder dergleichen gehärtet werden, stützt der Schaumkern die Versteifungsprofile.

Gemäß einer weiteren Ausführungsform werden die Formteile als Faserhalbzeuge an dem Schalenteil angeordnet und nach dem Anordnen mit einem Matrixmaterial infiltriert. Die Formteile können hierbei jeweils eine oder mehrere Lagen an Verstärkungsfasern enthalten. Das Schalenteil kann optional ebenfalls als Fasermatte vorliegen. Durch das Infiltrieren werden die Verstärkungsfasern in das Matrixmaterial eingebettet. Da die Formteile als trockene Matten vorliegen, wird die Umformung der Formteile zur Herstellung des Profilrands erleichtert. Zum Verbinden von Schalenteil und Formteilen kann die gebildete Anordnung unter Aufbringung eines Kompressionsdrucks konsolidiert werden, z.B. durch Einstellen einer Temperatur, bei der das Matrixmaterial härtet bzw. erstarrt. Als Matrixmaterial kann ein Thermosetmaterial oder ein Thermoplastmaterial verwendet werden.

Gemäß einer weiteren Ausführungsform werden die Formteile als Halbzeuge aus einem Faserverbundmaterial, welches in ein Matrixmaterial eingebettete Verstärkungsfasern aufweist, an dem Schalenteil angeordnet. Die Formteile sind demnach als Prepregbauteile oder -halbzeuge ausgebildet. Zum Verbinden von Schalenteil und Formteilen kann die gebildete Anordnung unter Aufbringung eines Kompressionsdrucks konsolidiert werden, z.B. durch Einstellen einer Temperatur, bei der das Matrixmaterial härtet bzw. erstarrt. Als Matrixmaterial kann ein Thermosetmaterial oder ein Thermoplastmaterial verwendet werden. Im Falle eines thermoplastischen Matrixmaterials muss vor dem Konsolidieren eine Temperatur eingestellt werden, die oberhalb des Schmelzpunkts des thermoplastischen Matrixmaterials liegt. Das Schalenteil kann optional ebenfalls als Prepreghalbzeug vorliegen.

Das Verbinden des Schalenteils und der Versteifungsstruktur kann somit beispielsweise durch gemeinsames Aushärten des Schalenteils und der Versteifungsstruktur erfolgen, wenn bei Prepreg-Halbzeuge als Faserverbundmaterial verwendet wird. Alternativ können das Schalenteil und die Versteifungsstruktur gemeinsames mit Harz bzw. Matrixmaterial infiltriert werden und Aushärten. Ferner ist auch denkbar, die Versteifungsstruktur und das Schalenteil durch Kleben zu verbinden, insbesondere wenn Duroplastwerkstoffe verwendet werden. Falls thermoplastische Faserverbundhalbzeuge verwendet werden kann das Verbinden auch durch Schweißen oder Co-konsolidieren erfolgen.

Gemäß einer weiteren Ausführungsform des Verfahrens umfasst das Ausbilden der Versteifungsstruktur optional ein Einlegen der Lastbänder in Vertiefungen, die in einer Konturfläche eines Formwerkzeugs ausgebildet sind. Weiterhin erfolgt ein Ablegen der Formteile auf die Konturfläche derart, dass sich die Profilabschnitte in den Vertiefungen überlappen und einer der überlappenden Profilabschnitte an dem gegebenenfalls in der jeweiligen Vertiefung gelegenen Lastband anliegt. Das Schalenteil wird mit der Innenfläche an die Versteifungsstruktur angelegt. Optional wird vor dem Anlegen des Schalenteils an die Versteifungsstruktur ein Schaumkern in die Vertiefungen an die Profilabschnitte angelegt. Durch das Einlegen der Lastbänder in Vertiefungen werden diese zuverlässig in deren Position fixiert. Das Ausbilden der Versteifungsstruktur auf der Konturfläche eines Formwerkzeugs, welches Vertiefungen aufweist, deren Verlauf den herzustellenden Versteifungsprofilen entspricht, bietet den Vorteil, dass eine präzise Positionierung der Formteile erleichtert wird.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Hierin wird unter einem "Faserwerkstoff", einem "Fasermaterial", einem "Faserverbundmaterial" oder einem "Faserverbundwerkstoff" allgemein ein Werkstoff verstanden, der eine Vielzahl von insbesondere fadenförmigen oder fadenstückförmigen Verstärkungsfasern, wie beispielsweise Kohle-, Glas-, Keramik-, Aramid-, Bor-, Mineral-, Natur- oder Kunststofffasern oder Mischungen aus diesen aufweist. Der Faserwerkstoff kann insbesondere auch mit einem Harz- oder Matrixmaterial wie z.B. einem duroplastischen, thermoplastischen, elastomeren Harz oder allgemein ein Kunststoffharz oder dergleichen imprägniert sein.

Im Folgenden wird die Erfindung unter Bezugnahme auf die Figuren der Zeichnungen erläutert. Von den Figuren zeigen:
- Fig. 1: eine schematische Ansicht eines Verfahrens zur Herstellung eines Rumpfbauteils gemäß einem Ausführungsbeispiel der vorliegenden Erfindung, wobei in dem Schritt ein Ausbilden einer Versteifungsstruktur dargestellt ist;
- Fig. 2: eine schematische Darstellung eines Formteils in einer perspektivischen Ansicht zur Verwendung in einem Verfahren gemäß einem Ausführungsbeispiel der vorliegenden Erfindung;
- Fig. 3: einen weiteren Schritt des Verfahrens zur Herstellung eines Rumpfbauteils gemäß einem Ausführungsbeispiel der vorliegenden Erfindung, wobei schematisch das Ablegen von Lastbändern dargestellt ist;
- Fig. 4: einen weiteren Schritt des Verfahrens zur Herstellung eines Rumpfbauteils gemäß einem Ausführungsbeispiel der vorliegenden Erfindung, wobei schematisch das Ablegen einer zusätzlichen Lage an Formteilen dargestellt ist;
- Fig. 5: ein schematische Darstellung eines Rumpfbauteils gemäß einem Ausführungsbeispiel der vorliegenden Erfindung in einer perspektivischen Ansicht;
- Fig. 6: eine schematische Schnittansicht eines Rumpfbauteils gemäß einem Ausführungsbeispiel der vorliegenden Erfindung, die sich bei einem Schnitt entlang der in Fig. 5 eingezeichneten Schnittlinie A-A ergibt;
- Fig. 7: eine schematische Schnittansicht eines Rumpfbauteils gemäß einem weiteren Ausführungsbeispiel der vorliegenden Erfindung, die sich bei einem Schnitt entlang der in Fig. 5 eingezeichneten Schnittlinie A-A ergibt;
- Fig. 8: ein schematische Darstellung eines Rumpfbauteils gemäß einem Ausführungsbeispiel der vorliegenden Erfindung in einer perspektivischen Ansicht;
- Fig. 9: ein schematische Teilansicht eines Rumpfbauteils gemäß einem Ausführungsbeispiel der vorliegenden Erfindung;
- Fig. 10: ein schematische Teilansicht eines Rumpfbauteils gemäß einem weiteren Ausführungsbeispiel der vorliegenden Erfindung;
- Fig. 11: ein schematische Teilansicht eines Rumpfbauteils gemäß einem weiteren Ausführungsbeispiel der vorliegenden Erfindung;
- Fig. 12: ein schematische Teilansicht eines Rumpfbauteils gemäß einem weiteren Ausführungsbeispiel der vorliegenden Erfindung; und
- Fig. 13: eine schematische Darstellung eines Luftfahrzeugs gemäß einem Ausführungsbeispiel der vorliegenden Erfindung in einer Draufsicht.

In den Figuren bezeichnen dieselben Bezugszeichen gleiche oder funktionsgleiche Komponenten, soweit nichts Gegenteiliges angegeben ist.

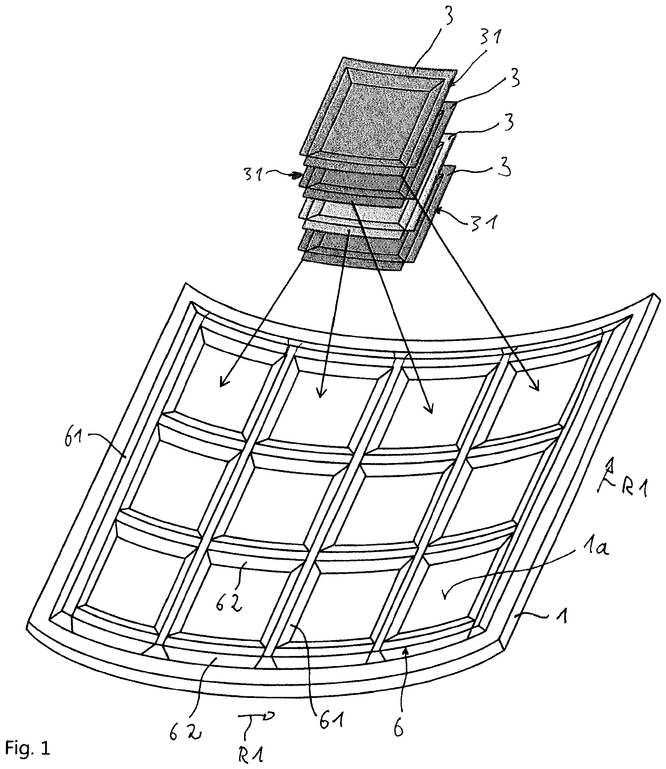

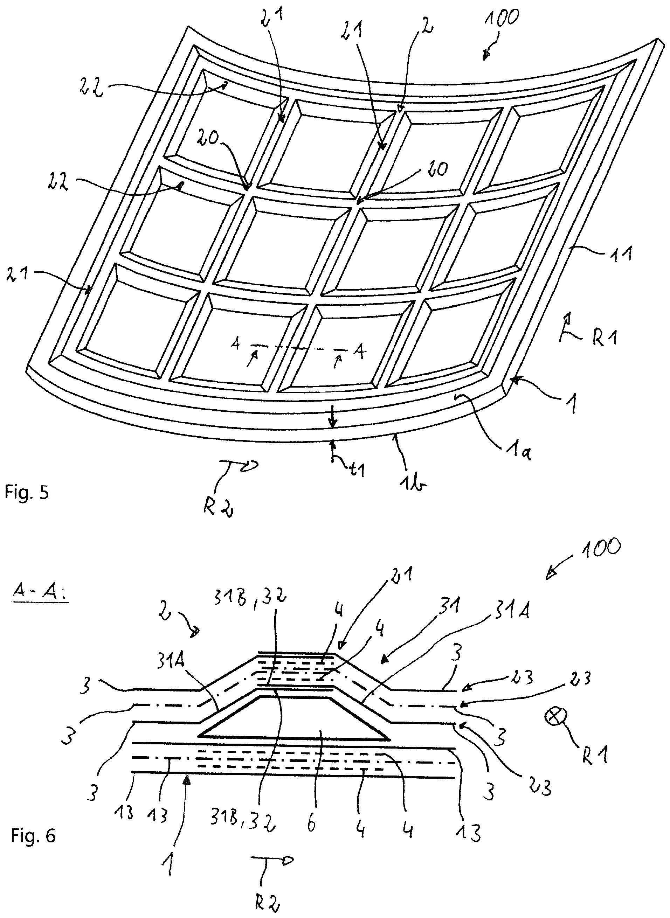

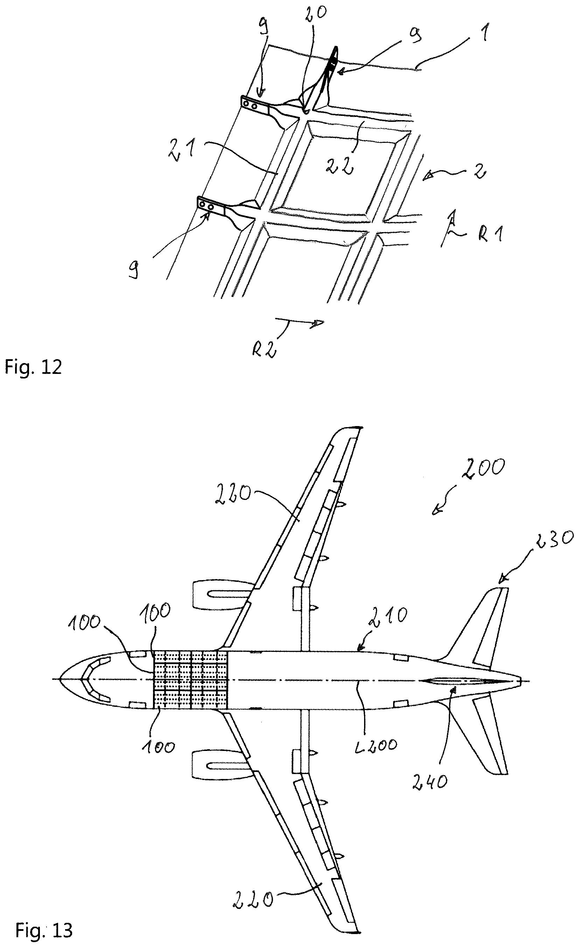

Die Fign. 1 bis 4 zeigen beispielhaft und schematisch ein Verfahren zur Herstellung eines Rumpfbauteils 100 für ein Luftfahrzeug 200. Fig. 5 zeigt beispielhaft ein Rumpfbauteil 100. Fig. 13 zeigt ein Luftfahrzeug 200 mit einem Rumpfbauteil 100.

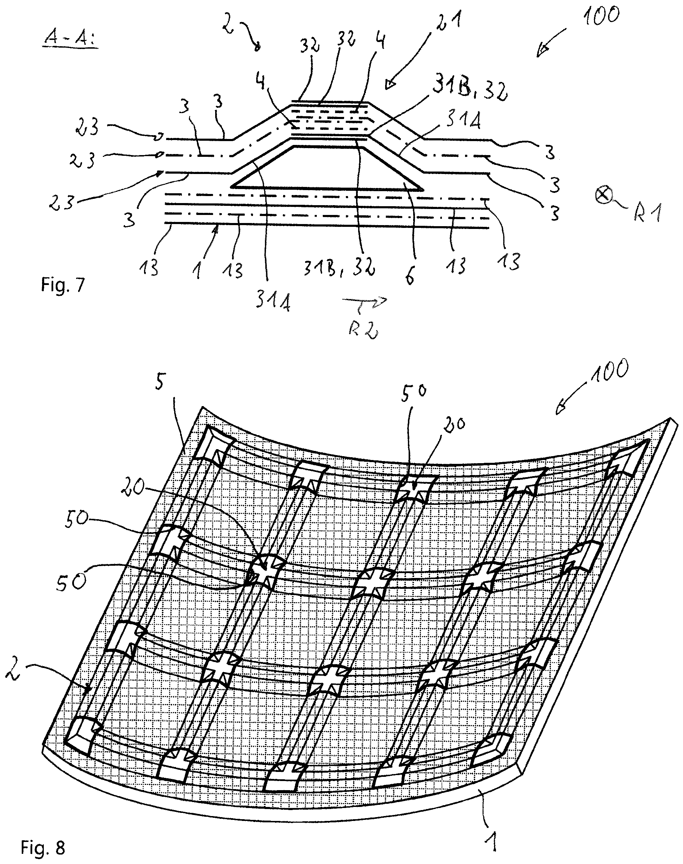

Wie in Fig. 5 dargestellt, weist das Rumpfbauteil 100 ein Schalenteil 1 und eine Versteifungsstruktur 2 auf. Das Schalenteil 1 ist als ein flächiges, insbesondere platten- oder schalenförmiges Bauteil realisiert. Das Schalenteil 1 weist eine Innenfläche 1a und eine entgegengesetzt zu dieser gelegene Außenfläche 1b auf. Das Schalenteil 1 kann insbesondere eine konstante oder eine im wesentlichen konstante Querschnittsdicke t1 aufweisen. Wie in Fig. 5 beispielhaft dargestellt, kann das Schalenteil 1 eine gekrümmte Erstreckung aufweisen. Beispielsweise kann die Innenfläche 1a des Schalenteils konkav gekrümmt sein, wie in Fig. 5 gezeigt. Das Schalenteil 1 ist aus einem Faserverbundmaterial gebildet. Wie in den Fign. 6 und 7 beispielhaft dargestellt ist, kann das Schalenteil 1 mehrere Faserlagen 13 aufweisen, die in ein Matrixmaterial eingebettet sind.

Die Versteifungsstruktur 2 ist mit der Innenfläche 1a des Schalenteils 1 verbunden, beispielsweise stoffschlüssig verbunden. Die in Fig. 5 beispielhaft dargestellte Versteifungsstruktur 2 weist erste Versteifungsprofile 21 und zweite Versteifungsprofile 22 auf, die sich quer zu den ersten Versteifungsprofilen 21 erstrecken und diese an einer Kreuzungsstelle 20 kreuzen. Die in Fig. 5 beispielhaft dargestellte Versteifungsstruktur 2 ist aus einer Vielzahl von Formteilen 3 und optionalen Lastbändern 4 gebildet.

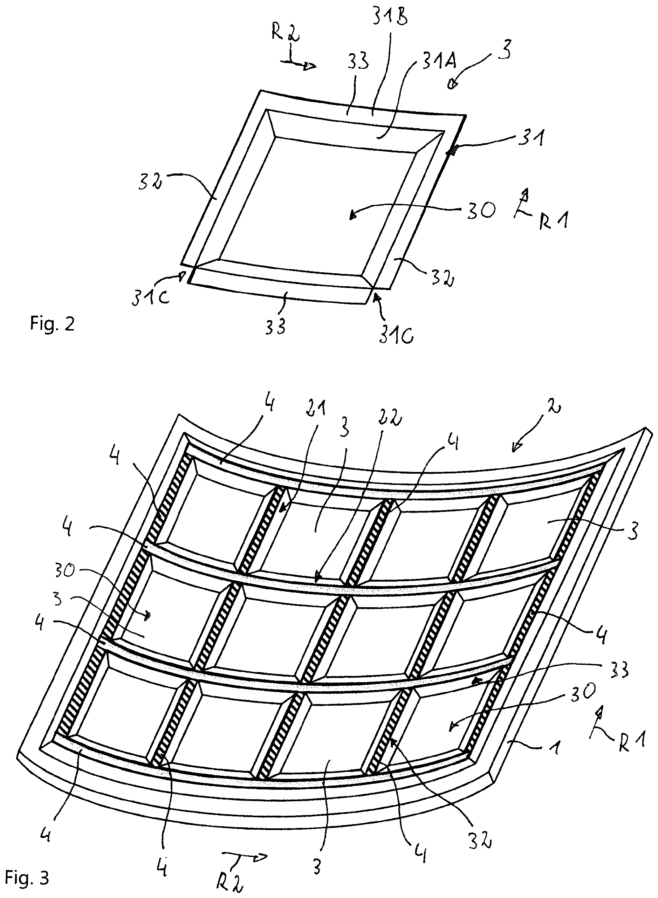

Fig. 2 zeigt beispielhaft ein Formteil 3. Das Formteil 3 weist einen flächigen Basisabschnitt 30 und einen Profilrand 31 auf. Der Basisabschnitt 30 kann insbesondere eine zu der Krümmung der Innenfläche 1a des Schalenteils 1 korrespondierende Krümmung aufweisen. Das in Fig. 2 beispielhaft dargestellte Formteil 3 weist einen rechteckförmigen Basisabschnitt 30 auf. Grundsätzlich sind auch andere polygonale Formen des Basisabschnitts 30 denkbar.

Der Profilrand 31 des Formteils 3 erstreckt sich stufenförmig von dem Basisabschnitt 30 aus. Dadurch ergibt sich eine wannenförmige Gestaltung des Formteils 3, wie in Fig. 2 beispielhaft dargestellt. Zur Ausbildung der Stufenform weist der Profilrand 31 einen sich quer zum Basisabschnitt erstreckenden Wandungsabschnitt 31A und einen nach außen von dem Wandungsabschnitt 31A abstehenden Stegabschnitt 31B auf. Der Profilrand 31 kann sich insbesondere umlaufend um den Basisabschnitt 30 erstrecken, wie dies in Fig. 2 beispielhaft dargestellt ist. Bei dem in Fig. 2 beispielhaft dargestellten Formteil 3 mit rechteckförmigem Basisabschnitt 30 weist der Profilrand jeweils zwei einander gegenüberliegende erste Profilabschnitte 32, die sich in einer ersten Richtung R1 erstrecken, und zwei einander gegenüberliegende zweite Profilabschnitte 33 auf, die sich zwischen den ersten Profilabschnitten 32 in einer zweiten Richtung R2 erstrecken. Wie in Fig. 2 weiterhin gezeigt ist, kann der Stegabschnitt 31B im Bereich einer Ecke eine Unterbrechung 31C aufweisen. In Fig. 2 weist der Stegabschnitt 31B beispielsweise an zwei einander gegenüberliegenden Ecken eine Unterbrechung 31C auf.

Der Profilrand 31 und der Basisabschnitt 30 des Formteils 3 sind einstückig ausgebildet. Insbesondere kann das Formteil 3 als ein Faserverbundbauteil ausgebildet sein, das eine oder mehrere Lagen von Verstärkungsfasern aufweist, die in ein Matrixmaterial eingebettet sind.

Fig. 1 zeigt beispielhaft einen Schritt eines Verfahrens zur Herstellung des Rumpfbauteils 100, in welchem eine Ausbildung der Versteifungsstruktur 2 erfolgt. Hierzu werden die Profilränder 31 von jeweils zwei Formteilen 3 überlappend angeordnet. Durch die stufenförmige Gestaltung des Profilrands 31 bilden die sich überlappenden Profilränder 31 ein Versteifungsprofil 21, 22 aus, insbesondere ein Versteifungsprofil 21, 22 mit einem Ω-förmigen Querschnitt, wie dies insbesondere in den in den Fign. 6 und 7 gezeigten Schnittansichten erkennbar ist.

In Fig. 1 ist beispielhaft dargestellt, dass eine Vielzahl gleichförmiger Formteile 3, wie sie in Fig. 2 beispielhaft dargestellt sind, zur Ausbildung der Versteifungsstruktur 2 in Form einer Parkettierung angeordnet werden, sodass sich Profilränder 31 überlappen und sich an einer Kreuzungsstelle 20 kreuzende Versteifungsprofile 21, 22 ausbilden. Bei der beispielhaft dargestellten Anordnung von Formteilen 3 mit rechteckförmigen Basisabschnitten 30 werden die ersten Profilabschnitte 32 von jeweils zwei Formteilen 3 derart überlappend angeordnet, dass diese ein sich in der ersten Richtung R1 erstreckendes erstes Versteifungsprofil 21 ausbilden. Die zweiten Profilabschnitte 33 von jeweils zwei Formteilen 3 werden weiterhin derart überlappend angeordnet werden, dass diese ein sich in der zweiten Richtung R2 erstreckendes zweites Versteifungsprofil 22 ausbilden, welches das erste Versteifungsprofil 21 an der Kreuzungsstelle 20 kreuzt.

Zur Herstellung des Rumpfbauteils 100 kann das Formteil 3 als ein trockenes Faserhalbzeug vorliegen, also in Form einer Fasermatte ohne Matrixmaterial. Alternativ kann das Formteil 3 auch als ein Vorformling in Form eines Prepreghalbzeugs vorliegen, bei dem die Verstärkungsfasern in ein Matrixmaterial eingebettet sind.

Die Basisabschnitte 30 der Formteile 3 und die Innenfläche 1a des Schalenteils 1 werden aneinander angelegt. Dies kann beispielsweise gleichzeitig bei der Ausbildung der Versteifungsstruktur 2 erfolgen, indem die Formteile 3 auf die Innenfläche 1a des Schalenteils 1 abgelegt werden, wie dies in Fig. 1 beispielhaft dargestellt ist. Nach dem Anlegen der Basisabschnitte 30 und der Innenfläche 1a aneinander erstrecken sich die Basisabschnitte 30 entlang der Innenfläche 1a des Schalenteils 1.

Optional wird zwischen den Versteifungsprofilen 21, 22 und dem Schalenteil 1 ein Schaumkern 6 angeordnet. In Fig. 1 ist beispielhaft dargestellt, dass der Schaumkern 6 einen zum Verlauf der Versteifungsprofile 21, 22 korrespondierenden Verlauf aufweist und auf der Innenfläche 1a des Schalenteils 1 angeordnet ist. Der Schaumkern 6 dient insbesondere der Stützung der Versteifungsstruktur 2 bzw. der Formteile 3 während der Herstellung des Rumpfbauteils 100. Gleichzeitig kann der Schaumkern 3 auch zur Verbesserung der mechanischen Steifigkeit des Rumpfbauteils 100 beitragen. Der Schaumkern 6 kann insbesondere aus einem Polymethacrylimid-Schaum hergestellt sein. Vorzugsweise ist der Schaumkern 6 aus mehreren Kernteilen 61, 62 zusammengesetzt, die untereinander formschlüssig, z.B. mittels Steckverbindungen (nicht dargestellt) aneinander gekoppelt sind. In Fig. 1 ist beispielhaft ein Schaumkern 6 dargestellt, welcher sich in der ersten Richtung R1 erstreckende durchgehende erste Kernteile 61 und zweite Kernteile 62 aufweist, die sich jeweils in der zweiten Richtung R2 zwischen zwei aufeinander folgenden ersten Kernteilen 61 erstrecken.

Fig. 3 zeigt einen optionalen Schritt des Verfahrens zur Herstellung des Rumpfbauteils 100. Für den Fall, dass eine Versteifungsstruktur 2 mit sich kreuzenden Versteifungsprofilen 21, 22 aus Formteilen 3 mit sich umlaufend um den Basisabschnitt 30 erstreckenden Profilrändern 31 ausgebildet wurde, erfolgt weiterhin ein Anordnen von Lastbändern 4. Die Lastbänder 4 können insbesondere Faserbänder mit sich unidirektional erstreckenden Verstärkungsfasern sein.

Wie in Fig. 3 beispielhaft dargestellt, werden die optionalen Lastbänder 4 auf den durch die überlappenden Profilränder 31 ausgebildeten Verstärkungsprofile 21, 22 angeordnet. Bei der in Fig. 3 beispielhaft dargestellten Anordnung der Formteile 3 als Parkettierung aus Formteilen 3 mit rechteckförmigem Basisabschnitt 30 wird jeweils ein Lastband 4 auf den sich überlappenden ersten Profilabschnitten 32 und jeweils ein Lastband 4 auf den sich überlappenden zweiten Profilabschnitten 33 angeordnet. Wie in Fig. 3 dargestellt, erstrecken sich die Lastbänder 4 durchgehend über die gesamte Längserstreckung eines jeweiligen durch die überlappenden Profilränder 31 ausgebildeten Verstärkungsprofils 21, 22. Allgemein erstrecken sich die Lastbänder 4 über die Kreuzungsstellen 20 hinweg. Da die Formteile 3 jeweils an den Kreuzungsstellen 20 enden, werden durch die Lastbänder 4 sich über die Kreuzungsstellen 20 hinweg erstreckende Verstärkungsfasern in der Versteifungsstruktur 2 vorgesehen, was die Kraftübertragung über die Kreuzungsstellen 20 hinweg verbessert.

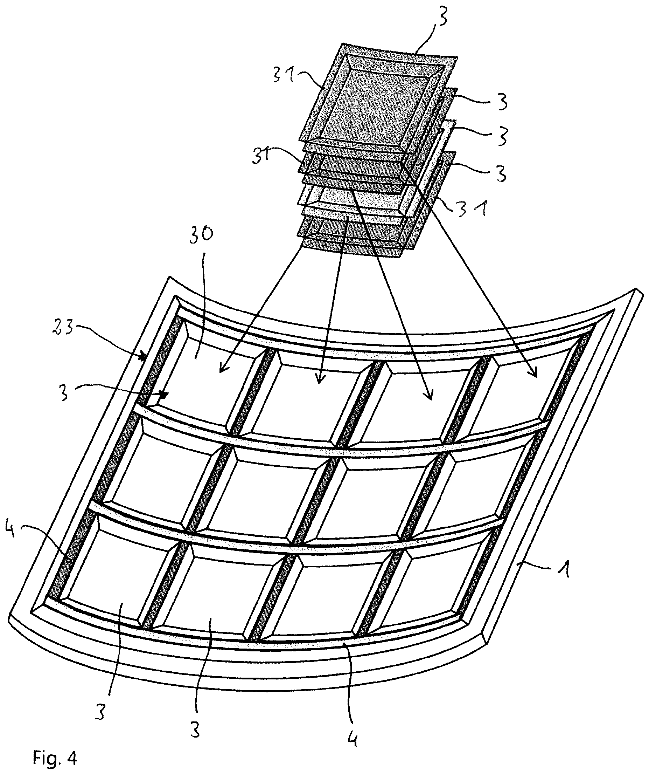

Fig. 4 zeigt einen optionalen weiteren Schritt des Verfahrens. In diesem Schritt wird eine weitere Lage 23 aus Formteilen 3 gebildet. Hierzu werden die Basisabschnitte 30 von weiteren Formteilen 3 und die Basisabschnitte 30 der bereits bestehenden

Lage 23 der Formteile 3 aneinander angelegt, wie dies in Fig. 4 beispielhaft dargestellt ist. Hierbei können die Formteile 3 insbesondere wie voranstehend beschrieben mit sich überlappenden Profilrändern 31 angeordnet werden. Grundsätzlich ist es denkbar, dass lediglich auf einem Teilbereich der bereits bestehenden Lage 23 eine weitere Lage 23 aus Formteilen 3 gebildet wird. Wie in Fig. 4 beispielhaft dargestellt ist, sind die gegebenenfalls vorgesehenen Lastbänder 4 zwischen zwei benachbarten Lagen 23 angeordnet. Optional können auf der weiteren Lage 23 weitere Lastbänder 4 wie voranstehend beschrieben angeordnet werden, insbesondere auch lediglich bereichsweise bzw. an einzelnen Kreuzungsstellen 20.

In einem weiteren Verfahrensschritt (nicht dargestellt) werden das Schalenteil 2 und die Versteifungsstruktur 2 miteinander verbunden. Falls trockene Faserhalbzeuge als Formteile 3 verwendet werden, kann das Verbinden von Schalenteil 1 und Versteifungsstruktur 2 beispielsweise erfolgen, indem die Formteile 3 mit nach dem Anordnen an dem Schalenteil 1 mit einem Matrixmaterial infiltriert und das Matrixmaterial anschließend konsolidiert wird. Beispielsweise kann thermoplastisches oder duroplastisches Matrixmaterial verwendet werden. Optional werden auch das Schalenteil 2 und die Lastbänder 4 als trockene Faserhalbzeuge bereitgestellt und gleichzeitig mit den Formteilen 3 infiltriert. Falls die Formteile 3 als Halbzeuge aus einem Faserverbundmaterial, welches in ein Matrixmaterial eingebettete Verstärkungsfasern aufweist, mit dem Schalenteil 1 angeordnet werden, kann das Verbinden durch einen Konsolidierungsschritt des Matrixmaterials erfolgen. Im Falle thermoplastischer Matrixmaterialien erfordert dies ein Erhitzen des Matrixmaterials auf eine Temperatur oberhalb des Schmelzpunkts des Matrixmaterials und, unter Aufbringung eines Kompressionsdrucks, ein Abkühlen des Matrixmaterials auf eine Erstarrungstemperatur unterhalb des Schmelzpunkts. Alternativ kann bei thermoplastischen Matrixmaterialien auch ein Verschweißen von Schalenteil 1 und Versteifungsstruktur 2 erfolgen. Im Falle von duroplastischen Thermoset-Matrixmaterialien wird die Temperatur unter Aufbringung eines Kompressionsdrucks auf eine Aktivierungstemperatur des Matrixmaterials eingestellt, bei welcher eine Härtungsreaktion des Matrixmaterials aktiviert wird.

Das in Fig. 5 beispielhaft dargestellte Rumpfbauteil 100 kann insbesondere auf die voranstehend beschriebene Weise hergestellt werden. In den Fign. 6 und 7 ist jeweils eine Schnittansicht des Rumpfbauteils 100 dargestellt, die sich bei einem Schnitt durch ein Versteifungsprofil 21, 22 ergibt. Die in den Fign. 6 und 7 beispielhaft dargestellte Schnittansicht ergibt sich bei einem Schnitt entlang der in Fig. 5 eingezeichneten Linie A-A durch ein erstes Versteifungsprofil 21.

Wie in den Fign. 6 und 7 erkennbar ist, sind insbesondere die Stegabschnitte 31B der Profilränder 31 von jeweils zwei Formteilen 3 überlappend angeordnet. Insbesondere können die Stegabschnitte 31B vollständig überlappend angeordnet sein, wie dies in den Fign. 6 und 7 dargestellt ist. Wie in den Fign. 6 und 7 deutlich erkennbar ist, wird durch die Überlappung der stufenförmigen Profilränder 31 eine etwa Ω-förmige Querschnittsform des Versteifungsprofils 21 definiert, innerhalb derer der optionale Schaumkern 6 angeordnet ist. Wie in den Fign. 6 und 7 weiter dargestellt ist, kann jeweils ein optionales Lastband 4 auf zwei sich überlappenden Stegabschnitten 31B des Profilrands 31 angeordnet sein. Selbstverständlich können auch mehrere Lastbänder 4 übereinanderliegend vorgesehen sein.

Die in den Fign. 6 und 7 beispielhaft dargestellten Verstärkungsstrukturen 2 weisen jeweils drei übereinander liegende Lagen 23 aus Formteilen 3 auf. Eine jeweilige Lage 23 wird hierbei durch zumindest zwei Formteile 3 gebildet, deren Profilränder 31 überlappend angeordnet sind, wie dies bereits beschrieben wurde. Wie in den Fign. 6 und 7 weiterhin erkennbar ist, sind die optionalen Lastbänder 4 jeweils zwischen zwei aneinander angrenzenden Lagen 23 auf zwei sich überlappenden Stegabschnitten 31B des Profilrands 31 einer jeweiligen Lage 23 angeordnet. Bei den in den Fign. 6 und 7 beispielhaft dargestellten Verstärkungsstrukturen 2 weisen die Formteile 3 der einzelnen Lagen 23 jeweils ein Gewebe oder Gelege mit sich senkrecht zueinander erstreckenden Verstärkungsfasern auf. In aneinander angrenzenden Lagen 23 verlaufen die Verstärkungsfasern in verschiedenen Richtungen. Beispielsweise können die Verstärkungsfasern der in den Fign. 6 und 7 als volle Linie dargestellten Formteile 3 sich jeweils in einer Richtung von +/- 45 Grad relativ zur Bildebene erstrecken und die Verstärkungsfasern der in den Fign. 6 und 7 als Strichpunktlinie dargestellten Formteile 3 können sich jeweils in einer Richtung von 0/90 Grad relativ zur Bildebene erstrecken. Die optionalen Lastbänder 4 sind schematisch als gestrichelte Linien dargestellt und können insbesondere sich unidirektional erstreckende Verstärkungsfasern aufweisen.

Wie in den Fign. 6 und 7 ferner beispielhaft dargestellt ist, können auch die Faserlagen 13 des Schalenteils 1 jeweils ein Gewebe oder Gelege mit sich senkrecht zueinander erstreckenden Verstärkungsfasern aufweisen. Wie in Fig. 6 beispielhaft gezeigt ist, kann im Bereich des Verstärkungsprofils 21 zwischen zwei aneinander angrenzenden Faserlagen 13 jeweils ein Lastband 4 angeordnet sein. Auch hier können optional mehrere Lastbänder 4 übereinander gestapelt angeordnet sein.

Das in Fig. 6 beispielhaft dargestellte Schalenteil 1 weist insgesamt drei Faserlagen 13 und zwei zwischen den Faserlagen 13 angeordnete Lastbänder 4 auf. In den in Fig. 6 als volle Linien dargestellten Faserlagen 13 erstrecken sich die Verstärkungsfasern in einer Richtung von +/- 45 Grad relativ zur Bildebene und die Verstärkungsfasern der als Strichpunktlinie dargestellten Faserlage 13 erstrecken sich in einer Richtung von 0/90 Grad relativ zur Bildebene. Die dazwischen angeordneten Lastbänder 4 weisen unidirektionale Verstärkungsfasern auf.

Das in Fig. 7 beispielhaft dargestellte Schalenteil 1 weist insgesamt vier Faserlagen 13 auf, wobei im Unterschied zu Fig. 6 keine Lastbänder 4 im Schalenteil 1 vorgesehen sind. Auch in Fig. 7 erstrecken sich Verstärkungsfasern aneinander angrenzender Faserlagen 13 in verschiedenen Richtungen. In den in Fig. 7 als volle Linien dargestellten Faserlagen 13 erstrecken sich die Verstärkungsfasern in einer Richtung von +/- 45 Grad relativ zur Bildebene und die Verstärkungsfasern der als Strichpunktlinie dargestellten Faserlage 13 erstrecken sich in einer Richtung von 0/90 Grad relativ zur Bildebene.

Fig. 8 zeigt beispielhaft ein Rumpfbauteil 100, dessen Versteifungsstruktur 2 eine flächige Abdecklage 5 aus einem Faserverbundmaterial aufweist. Die Abdecklage 5 kann beispielsweise an die in Fig. 3 dargestellte Anordnung aus Formteilen 3 und Lastbändern 4 oder nach dem optionalen Ausbilden weiterer Lagen 23 aus Formteilen 3 angelegt werden. Im Bereich der Kreuzungsstellen 20 weist die Abdecklage Ausnehmungen 50 auf. Dadurch wird die Verformung der Abdecklage 5, die zum Anlegen der Abdecklage 5 an die Formteile 3 notwendig ist, erleichtert. Die Abdecklage 50 kann insbesondere beim Konsolidieren der Formteile 3 mit diesen verbunden werden.

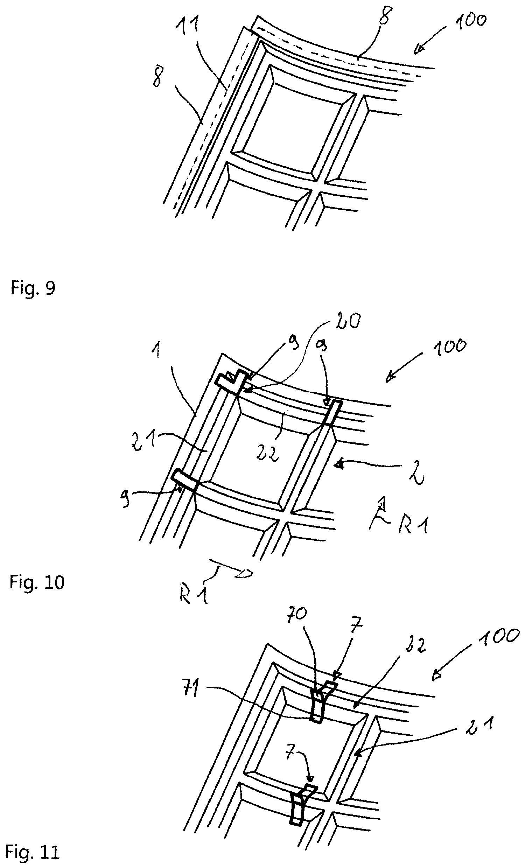

Fig. 9 zeigt beispielhaft ein Rumpfbauteil 100, das einen optionalen Verbindungsstreifen 8 aufweist, der zur Verbindung mehrerer Rumpfbauteile 100 untereinander dient. Der Verbindungsstreifen 8 ist mit der Innenfläche 1a des Schalenteils 1 verbunden. Beispielsweise kann der Verbindungsstreifen 8 ebenfalls aus einem Faserverbundmaterial gebildet sein und kann beim Konsolidieren des Schalenteils 1 an dieses angeformt werden. Wie in Fig. 9 schematisch dargestellt ist, erstreckt sich der Verbindungsstreifen entlang eines Umfangsrands 11 des Schalenteils 1 erstreckt und steht über diesen vor. Zur Verbindung zweiter Rumpfbauteile 100 können diese mit deren Verbindungsstreifen 8 überlappend angeordnet werden oder der Verbindungsstreifen 8 von einem der Rumpfbauteile 100 überlappt einen Randbereich des Schalenteils 1 des weiteren Rumpfbauteils 100. Die Verbindungsstreifen 8 können mit dem Verbindungsstreifen 8 oder dem Randbereich des Schalenteils 1 des weiteren Rumpfbauteils 100 verklebt, verschweißt, vernietet, verschraubt oder in ähnlicher Weise verbunden werden.

Das in Fig. 10 beispielhaft gezeigte Rumpfbauteil 100 weist eine optionale Profilkopplungsstruktur 9 auf. Die Profilkopplungsstruktur 9 dient zur mechanischen, kraftleitenden Verbindung von Versteifungsprofilen 21, 22 miteinander verbundener Rumpfbauteile 100. Die Profilkopplungsstruktur 9 kann insbesondere als ein Streifen oder ein Winkel ausgeführt und beispielsweise aus einem Faserverbundmaterial gebildet sein. Die Profilkopplungsstruktur 9 kann insbesondere zwischen einzelnen Lagen 23 der Versteifungsstruktur 2 angeordnet und mit diesen verbunden sein. Alternativ kann die Profilkopplungsstruktur 9, wie in Fig. 10 schematisch gezeigt auf der Oberfläche der Versteifungsstruktur 2 befestigt sein. Die Profilkopplungsstruktur 9 ragt in Bezug auf die Längserstreckung des jeweiligen Versteifungsprofils 21, 22 über eine Ende des jeweiligen Versteifungsprofils 21, 22 hinaus, wie dies in Fig. 10 schematisch dargestellt ist. Hierbei ist eine Profilkopplungsstruktur 9, die an einer ein Eck der Versteifungsstruktur 2 bildenden Kreuzungsstelle 20 angeordnet ist, als Winkel ausgebildet, der sowohl in Bezug auf die erste Richtung R1 über ein Ende des ersten Versteifungsprofils 21 als auch in Bezug auf die zweite Richtung R2 über ein Ende des zweiten Versteifungsprofils 22 hinausragt.

Fig. 11 zeigt weiterhin ein Rumpfbauteil 100 mit einer optionalen Anschlussstruktur 7, welche zur Befestigung von Innenverkleidungsteilen (nicht dargestellt), Rohren (nicht dargestellt) oder dergleichen dient. Die Anschlussstruktur 7 mit einem der Versteifungsprofile 21, 22 verbunden und weist eine von dem jeweiligen Versteifungsprofil 21, 22 vorspringende Lasche 70 auf, wie dies in Fig. 11 beispielhaft dargestellt ist. Die Anschlussstruktur 7 kann insbesondere einen bügelförmigen Profilabschnitt 71 aufweisen, welcher eine zur der Querschnittsform des jeweiligen Versteifungsprofils 21, 22 korrespondierende Gestalt aufweist. Dieser Profilabschnitt 71 kann, wie in Fig. 11 beispielhaft gezeigt, auf das jeweilige Versteifungsprofil 71 aufgesetzt sein oder zwischen einzelne Lagen 23 des Versteifungsprofils 21, 22 eingesetzt sein. Die Lasche 70 ist vorzugsweise einstückig mit dem Profilabschnitt 71 ausgebildet. Die Anschlussstruktur 7 kann beispielsweise aus einem Faserverbundmaterial gebildet sein.

Das in Fig. 12 beispielhaft gezeigte Rumpfbauteil 100 weist eine optionale Profilkopplungsstruktur 9 auf. Im Unterschied zu dem in Fig. 10 beispielhaft dargestellten Rumpfbauteil 100 ist die Profilkopplungsstruktur 9 in Fig. 12 jeweils durch einen Fortsatz des Versteifungsprofils 21, 22 gebildet. Diese Fortsätze verjüngen sich entlang der ersten Richtung R1 bzw. der zweiten Richtung R2 zum Ende hin derart, dass dort lokal eine monolithische, massive Struktur gebildet wird. Allgemein kann die Profilkopplungsstruktur 9 demnach einstückig mit den Versteifungsprofilen 21, 22 ausgebildet sein. Die die Profilkopplungsstruktur 9 bildenden monolithischen Bereiche können z.B. zumindest teilweise durch die optionalen Lastbänder 4 gebildet sein. Falls ein Schaumkern verwendet wird, erstreckt sich dieser Schaumkern nicht bis in den monolithischen Endbereich der Profilkopplungsstruktur 9 hinein. Mittels Bolzenverbindungen kann die so gebildete Profilkopplungsstruktur 9 mit einer Profilkopplungsstruktur 9 eines weiteren Rumpfbauteils 100 gekoppelt werden kann. Der Übergang zwischen dem Sandwich-Versteifungselement und dem monolithischen Koppelelement ist idealerweise so ausgeführt, dass die Lastbänder dort ununterbrochen hineinlaufen.

Das in Fig. 13 beispielhaft dargestellte Luftfahrzeug 200 weist einen eine Längsachse L200 definierenden Rumpf 210, mit dem Rumpf 210 verbundene und seitlich von diesem Abstehende Flügel 220, ein an einem Ende des Rumpfs 210 angeordnetes Höhenleitwerk 230 und ein ebenfalls am Ende des Rumpfs 210 angeordnetes Seitenleitwerk 240 auf. Wie in Fig. 13 schematisch dargestellt ist, kann der Rumpf 210 mehrere der voranstehend beschriebenen Rumpfbauteile 100 aufweisen. Hierbei sind mehrere Rumpfbauteile 100 entlang der Längsachse L200 aneinander angrenzend angeordnet. Ferner können mehrere der Rumpfbauteile 100 in einer die Längsachse L200 umschließenden Umfangsrichtung aneinander angrenzend angeordnet sein. Die ersten Versteifungsprofile 21 erstrecken sich hierbei entlang der Längsachse L200, die zweiten Versteifungsprofile 22 entlang der Umfangsrichtung. Die einzelnen Rumpfbauteile 100 können beispielsweise über die anhand der Fig. 9 beschriebenen optionale Verbindungsstreifen 8 aneinander gekoppelt sein. Die Versteifungsprofile 21, 22 der einzelnen Rumpfbauteile 100 können beispielsweise über die anhand der Fig. 10 beschriebenen Profilkopplungsstrukturen 9 aneinander gekoppelt sein.

Obwohl die vorliegende Erfindung vorstehend anhand von Ausführungsbeispielen exemplarisch erläutert wurde, ist sie darauf nicht beschränkt, sondern auf vielfaltige Weise modifizierbar. Insbesondere sind auch Kombinationen der voranstehenden Ausführungsbeispiele denkbar, vorausgesetzt sie fallen in den Schutzbereich der beigefügten Ansprüche.

### BEZUGSZEICHENLISTE

- 1: Schalenteil
- 1a: Innenfläche
- 1b: Außenfläche
- 2: Versteifungsstruktur
- 3: Formteile
- 4: Lastbänder
- 5: Abdecklage
- 7: Anschlussstruktur
- 8: Verbindungsstreifen
- 9: Profilkopplungsstruktur
- 11: Umfangsrand des Schalenteils
- 13: Faserlagen des Schalenteils
- 20: Kreuzungsstelle
- 21: erstes Versteifungsprofil
- 22: zweites Versteifungsprofil
- 23: Lagen der Versteifungsstruktur
- 30: Basisabschnitt
- 31: Profilrand
- 31A: Wandungsabschnitt
- 31B: Stegabschnitt
- 31C: Unterbrechung
- 32: erste Profilabschnitte
- 33: zweite Profilabschnitte
- 50: Ausnehmungen
- 70: Lasche
- 71: Profilabschnitt
- 100: Rumpfbauteil
- 200: Luftfahrzeug
- 210: Rumpf
- 220: Flügel
- 230: Höhenleitwerk
- 240: Seitenleitwerk
- L200: Längsachse
- R1: erste Richtung
- R2: zweite Richtung
- t1: Querschnittsdicke des Schalenteils

## Patentansprüche

1. Rumpfbauteil (100) für ein Luftfahrzeug (200), mit:
einem sich flächig erstreckenden Schalenteil (1) aus einem Faserverbundmaterial; und
einer mit einer Innenfläche (1a) des Schalenteils (1) verbundenen Versteifungsstruktur (2), welche eine Vielzahl von Formteilen (3) aus einem Faserverbundmaterial aufweist;
wobei die Formteile (3) jeweils einen flächigen Basisabschnitt (30), welcher sich entlang der Innenfläche (1a) des Schalenteils (1) erstreckt, und einen stufenförmigen Profilrand (31) aufweisen, der sich umlaufend um den Basisabschnitt (30) erstreckt;
wobei die Formteile (3) in Form einer Parkettierung mit sich überlappenden Profilrändern (31) angeordnet sind, wobei die sich überlappenden Profilränder (31) sich an einer Kreuzungsstelle (20) kreuzende Versteifungsprofile (21, 22) ausbilden.

2. Rumpfbauteil (100) nach Anspruch 1, wobei mit jedem Versteifungsprofil (21; 22) jeweils ein Lastband (4) aus einem Faserverbundmaterial verbunden ist, welches sich über die Kreuzungsstelle (20) hinweg erstreckt.

3. Rumpfbauteil (100) nach Anspruch 1 oder 2, wobei die Basisabschnitte des Formteils (3) rechteckförmig ausgebildet sind, wobei der Profilrand (31) eines jeweiligen Formteils (3) jeweils zwei einander gegenüberliegende erste Profilabschnitte (32), die sich in einer ersten Richtung (R1) erstrecken, und zwei einander gegenüberliegende zweite Profilabschnitte (33) aufweist, die sich zwischen den ersten Profilabschnitten (32) in einer zweiten Richtung (R2) erstrecken, wobei sich die ersten Profilabschnitte (32) von jeweils zwei in der zweiten Richtung (R2) benachbarten Formteilen (3) derart überlappen, dass diese ein sich in der ersten Richtung (R1) erstreckendes erstes Versteifungsprofil (21) ausbilden, wobei sich die zweiten Profilabschnitte (33) von jeweils zwei in der ersten Richtung (R1) benachbarten Formteilen (3) derart überlappen, dass diese ein sich in einer zweiten Richtung (R2) erstreckendes zweites Versteifungsprofil (22) ausbilden, welches das erste Versteifungsprofil (21) an einer Kreuzungsstelle (20) kreuzt, und wobei bevorzugt jeweils ein Lastband (4) mit den sich überlappenden ersten Profilabschnitten (32) verbunden ist und sich über die Kreuzungsstelle (20) hinweg erstreckt und jeweils ein Lastband (4) mit den sich überlappenden zweiten Profilabschnitten (33) verbunden ist und sich über die Kreuzungsstelle (20) hinweg erstreckt.

4. Rumpfbauteil (100) nach einem der voranstehenden Ansprüche, wobei die Versteifungsstruktur (2) zumindest bereichsweise mit mehreren übereinanderliegenden Lagen (23) aus Formteilen (3) gebildet ist, wobei sich die Profilränder (31) benachbarter Formteile (3) einer jeweiligen Lage (23) überlappen, und wobei vorzugsweise zwischen zwei benachbarten Lagen (23) jeweils ein Lastband (4) angeordnet ist, das sich auf den Profilrändern (31) über die Kreuzungsstelle (20) hinweg erstreckt.

5. Rumpfbauteil (100) nach einem der voranstehenden Ansprüche, wobei die Versteifungsstruktur (2) eine flächige Abdecklage (5) aus einem Faserverbundmaterial aufweist, wobei die Abdecklage (5) an den Formteilen (3) anliegt und im Bereich der Kreuzungsstellen (20) Ausnehmungen (50) aufweist.

6. Rumpfbauteil (100) nach einem der voranstehenden Ansprüche, zusätzlich aufweisend:
einen Schaumkern (6), welcher zwischen den Versteifungsprofilen (21; 22) und dem Schalenteil (1) angeordnet ist.

7. Rumpfbauteil (100) nach einem der voranstehenden Ansprüche, zusätzlich aufweisend:
eine mit einem der Versteifungsprofile (21; 22) verbundene Anschlussstruktur (7), welche eine von dem Versteifungsprofil (21; 22) vorspringende Lasche (70) aufweist.

8. Rumpfbauteil (100) nach einem der voranstehenden Ansprüche, zusätzlich aufweisend:
einen mit der Innenfläche (1a) des Schalenteils (1) verbundenen Verbindungsstreifen (8), welcher sich entlang eines Umfangsrands (11) des Schalenteils (1) erstreckt und über diesen vorspringt.

9. Rumpfbauteil (100) nach einem der voranstehenden Ansprüche, zusätzlich aufweisend:
eine mit einem der Versteifungsprofile (21; 22) verbundene Profilkopplungsstruktur (9), welche in Bezug auf die Längserstreckung des jeweiligen Versteifungsprofils (21; 22) über ein Ende des jeweiligen Versteifungsprofils (21; 22) hinausragt.

10. Luftfahrzeug (200) mit einem Rumpf (210), welcher zumindest ein
Rumpfbauteil (100) gemäß einem der voranstehenden Ansprüche aufweist.

11. Verfahren zur Herstellung eines Rumpfbauteils (100) mit folgenden Verfahrensschritten:
Ausbilden einer Versteifungsstruktur (2) aus einer Vielzahl von Formteilen (3) aus einem Faserverbundmaterial, welche jeweils einen flächigen Basisabschnitt (30) und einen stufenförmigen Profilrand (31) aufweisen,
wobei die Profilränder (31) von jeweils zwei Formteilen (3) derart überlappend angeordnet werden, dass diese ein Versteifungsprofil (21; 22) ausbilden;
Anlegen einer Innenfläche (1a) eines sich flächig erstreckenden Schalenteils (1) aus einem Faserverbundmaterial an die Basisabschnitte (30) der Formteile (3) der Versteifungsstruktur (2); und
Verbinden des Schalenteils (1) und der Versteifungsstruktur (2).

12. Verfahren nach Anspruch 11, wobei der Profilrand (31) sich umlaufend um den Basisabschnitt (30) erstreckt, wobei die Formteile (3) in Form einer Parkettierung derart angeordnet werden, dass sich Profilränder (31) überlappen und sich an einer Kreuzungsstelle (20) kreuzende Versteifungsprofile (21, 22) ausbilden.

13. Verfahren nach Anspruch 12, wobei mit jedem Versteifungsprofil (21; 22) jeweils ein Lastband (4) verbunden wird, welches sich über die Kreuzungsstelle (20) hinweg erstreckt.

14. Verfahren nach Anspruch 12 oder 13, wobei die Basisabschnitte (30) der Formteile (3) rechteckförmig ausgebildet sind, wobei der Profilrand (31) zwei einander gegenüberliegende erste Profilabschnitte (32), die sich in einer ersten Richtung (R1) erstrecken, und zwei einander gegenüberliegende zweite Profilabschnitte (33) aufweisen, die sich zwischen den ersten Profilabschnitten (32) in einer zweiten Richtung (R2) erstrecken, wobei die ersten Profilabschnitte (32) von jeweils zwei Formteilen (3) derart überlappend angeordnet werden, dass diese ein sich in der ersten Richtung (R1) erstreckendes erstes Versteifungsprofil (21) ausbilden, wobei die zweiten Profilabschnitte (33) von jeweils zwei Formteilen (3) derart überlappend angeordnet werden, dass diese ein sich in der zweiten Richtung (R2) erstreckendes zweites Versteifungsprofil (22) ausbilden, welches das erste Versteifungsprofil (21) an der Kreuzungsstelle (20) kreuzt, und wobei bevorzugt mit den ersten Profilabschnitten (32) und den zweiten Profilabschnitten (33) jeweils sich über die Kreuzungsstellen (20) hinweg erstreckende Lastbänder (4) aus einem Faserverbundmaterial verbunden werden.

15. Verfahren nach einem der Ansprüche 11 bis 14, wobei zur Stützung der Versteifungsstruktur (2) ein Schaumkern (6) zwischen den Versteifungsprofilen (21; 22) und dem Schalenteil (1) angeordnet wird.

16. Verfahren nach einem der Ansprüche 11 bis 15, wobei die Formteile (3) als Faserhalbzeuge an dem Schalenteil (1) angeordnet und nach dem Anordnen mit einem Matrixmaterial infiltriert werden.

17. Verfahren nach einem der Ansprüche 11 bis 15, wobei die Formteile (3) als Halbzeuge aus einem Faserverbundmaterial, welches in ein Matrixmaterial eingebettete Verstärkungsfasern aufweist, an dem Schalenteil (1) angeordnet werden.

## Claims

1. Fuselage component (100) for an aircraft (200), comprising:
a flatly extending shell part (1) made of a fibre composite material; and
a stiffening structure (2) connected to an inner surface (1a) of the shell part (1), comprising a plurality of moulded parts (3) made of a fibre composite material;
wherein the moulded parts (3) each have a planar base portion (30) extending along the inner surface (1a) of the shell part (1) and a step-shaped profile edge (31) extending circumferentially around the base portion (30);
wherein the moulded parts (3) are arranged in the form of a parquetry with overlapping profile edges (31), wherein the overlapping profile edges (31) form stiffening profiles (21, 22) crossing each other at a crossing point (20).

2. The fuselage component (100) according to claim 1, wherein a load band (4) of a fibre composite material is connected to each stiffening profile (21; 22), which load band (4) extends across the crossing point (20).

3. The fuselage component (100) according to claim 1 or 2, wherein the base portions of the moulded part (3) are rectangular in shape, wherein the profile edge (31) of a respective moulded part (3) has in each case two mutually opposite first profile portions (32), which extend in a first direction (R1), and two mutually opposite second profile portions (33), which extend between the first profile sections (32) in a second direction (R2), the first profile sections (32) of in each case two moulded parts (3) adjacent in the second direction (R2) overlapping in such a way that they form a first stiffening profile (21) extending in the first direction (R1), wherein the second profile sections (33) of in each case two moulded parts (3) adjacent in the first direction (R1) overlap in such a way that these form a second stiffening profile (22) extending in a second direction (R2), which crosses the first stiffening profile (21) at a crossing point (20), and wherein preferably a respective load band (4) is connected to the overlapping first profile sections (32) and extends across the crossing point (20), and a respective load band (4) is connected to the overlapping second profile sections (33) and extends across the crossing point (20).

4. The fuselage component (100) according to one of the preceding claims, wherein the stiffening structure (2) is formed, at least in regions, with a plurality of overlapping layers (23) of moulded parts (3), wherein the profile edges (31) of adjacent moulded parts (3) of a respective layer (23) overlap, and wherein a respective load band (4) is preferably arranged between two adjacent layers (23) and extends on the profile edges (31) beyond the crossing point (20).

5. The fuselage component (100) according to one of the preceding claims, wherein the stiffening structure (2) has a flat covering layer (5) made of a fibre composite material, wherein the covering layer (5) rests against the moulded parts (3) and has recesses (50) in the region of the crossing points (20).

6. The fuselage component (100) according to one of the preceding claims, additionally comprising:
a foam core (6) which is arranged between the stiffening profiles (21; 22) and the shell part (1).

7. The fuselage component (100) according to one of the preceding claims, additionally comprising:
a connection structure (7) connected to one of the stiffening profiles (21; 22) and having a tab (70) projecting from the stiffening profile (21; 22).

8. The fuselage component (100) according to one of the preceding claims, additionally comprising:
a connecting strip (8) connected to the inner surface (1a) of the shell part (1), which extends along and projects beyond a peripheral edge (11) of the shell part (1).

9. The fuselage component (100) according to one of the preceding claims, additionally comprising:
a profile coupling structure (9) connected to one of the stiffening profiles (21; 22) and projecting beyond one end of the respective stiffening profile (21; 22) with respect to the longitudinal extension of the respective stiffening profile (21; 22).

10. An aircraft (200) comprising a fuselage (210) having at least one fuselage component (100) according to any one of the preceding claims.

11. Method of manufacturing a fuselage component (100) comprising the following method steps:
Forming a stiffening structure (2) from a plurality of moulded parts (3) of a fibre composite material, each having a planar base portion (30) and a step-shaped profile edge (31),
wherein the profile edges (31) of two respective moulded parts (3) are arranged to overlap in such a way that they form a stiffening profile (21; 22);
abutting an inner surface (1a) of a planarly extending shell part (1) made of a fibre composite material against the base portions (30) of the moulded parts (3) of the stiffening structure (2); and
Connecting the shell part (1) and the stiffening structure (2).

12. The method according to claim 11, wherein the profile edge (31) extends circumferentially around the base portion (30), wherein the moulded parts (3) are arranged in the form of a parquetry in such a way that profile edges (31) overlap and form stiffening profiles (21, 22) crossing each other at a crossing point (20).

13. The method according to claim 12, wherein a respective load band (4) is connected to each stiffening profile (21; 22), which load band extends across the crossing point (20).

14. The method according to claim 12 or 13, wherein the base portions (30) of the moulded parts (3) are formed in a rectangular shape, wherein the profile edge (31) comprises two opposing first profile portions (32) extending in a first direction (R1) and two opposing second profile portions (33) extending between the first profile portions (32) in a second direction (R2), wherein the first profile portions (32) of two respective moulded parts (3) are arranged overlappingly in such a way that these form a first stiffening profile (21) extending in the first direction (R1), wherein the second profile sections (33) of two respective moulded parts (3) are arranged overlapping in such a way that these form a second stiffening profile (22) extending in the second direction (R2), which crosses the first stiffening profile (21) at the crossing point (20), and wherein load bands (4) made of a fibre composite material and extending over the crossing points (20) are preferably connected to the first profile sections (32) and the second profile sections (33).

15. The method according to any one of claims 11 to 14, wherein a foam core (6) is arranged between the stiffening profiles (21; 22) and the shell part (1) for supporting the stiffening structure (2).

16. The method according to any one of claims 11 to 15, wherein the moulded parts (3) are arranged as semi-finished fibre products on the shell part (1) and are infiltrated with a matrix material after being arranged.

17. The method according to any one of claims 11 to 15, wherein the moulded parts (3) are arranged on the shell part (1) as semi-finished products made of a fibre composite material comprising reinforced fibres embedded in a matrix material.

## Revendications

1. Elément de fuselage (100) pour un aéronef (200), comprenant:
une partie de coque (1) s'étendant à plat et constituée d'un matériau composite renforcé par des fibres; et
une structure de renforcement (2) reliée à une surface intérieure (1a) de la partie de coque (1), qui comprend une pluralité de pièces moulées (3) en un matériau composite fibreux;
les pièces moulées (3) présentant chacune une section de base plane (30), qui s'étend le long de la surface intérieure (1a) de la partie de coque (1), et un bord profilé (31) en forme de gradin, qui s'étend sur tout le pourtour de la section de base (30);
les pièces moulées (3) étant disposées sous la forme d'un parquet avec des bords de profilés (31) se chevauchant, les bords de profilés (31) se chevauchant formant des profilés de renforcement (21, 22) se croisant en un point de croisement (20).

2. Elément de fuselage (100) selon la revendication 1, dans lequel une bande de charge (4) en un matériau composite renforcé par des fibres est respectivement reliée à chaque profilé de renforcement (21 ; 22) et s'étend au-delà du point de croisement (20).

3. Elément de fuselage (100) selon la revendication 1 ou 2, dans lequel les sections de base de la pièce moulée (3) sont de forme rectangulaire, le bord profilé (31) d'une pièce moulée (3) respective présentant respectivement deux premières sections de profil (32) opposées l'une à l'autre, qui s'étendent dans une première direction (R1), et deux secondes sections de profil (33) opposées l'une à l'autre, qui s'étendent entre les premiers sections de profil (32) dans une deuxième direction (R2), les premiers sections de profil (32) de respectivement deux pièces moulées (3) voisines dans la deuxième direction (R2) se chevauchant de telle sorte que celles-ci forment un premier profil de renforcement (21) s'étendant dans la première direction (R1), les deuxièmes sections de profil (33) de respectivement deux pièces moulées (3) voisines dans la première direction (R1) se chevauchant de telle sorte que celles-ci forment un deuxième profil de renforcement (22) s'étendant dans une deuxième direction (R2), lequel croise le premier profil de renforcement (21) en un point de croisement (20), et où, de préférence, une bande de charge (4) est respectivement reliée aux premiers sections de profil (32) se chevauchant et s'étend au-delà du point de croisement (20) et une bande de charge (4) est respectivement reliée aux deuxièmes sections de profil (33) se chevauchant et s'étend au-delà du point de croisement (20).

4. Elément de fuselage (100) selon l'une des revendications précédentes, dans lequel la structure de renforcement (2) est formée au moins par zones avec plusieurs couches (23) superposées de pièces moulées (3), dans lequel les bords profilés (31) de pièces moulées (3) voisines d'une couche (23) respective se chevauchent, et dans lequel de préférence une bande de charge (4) est disposée respectivement entre deux couches (23) voisines, laquelle s'étend sur les bords profilés (31) au-delà du point de croisement (20).

5. Elément de fuselage (100) selon l'une des revendications précédentes, dans lequel la structure de renforcement (2) présente une couche de recouvrement plane (5) en un matériau composite renforcé par des fibres, la couche de recouvrement (5) s'appliquant contre les pièces moulées (3) et présentant des évidements (50) dans la zone des points de croisement (20).

6. Elément de fuselage (100) selon l'une des revendications précédentes, comprenant en outre:
un noyau de mousse (6), qui est disposé entre les profilés de renforcement (21 ; 22) et la partie de coque (1).

7. Elément de fuselage (100) selon l'une des revendications précédentes, comprenant en outre:
une structure de raccordement (7) reliée à l'un des profilés de renforcement (21 ; 22), qui présente une patte (70) faisant saillie du profilé de renforcement (21 ; 22).

8. Elément de fuselage (100) selon l'une des revendications précédentes, comprenant en outre:
une bande de liaison (8) reliée à la surface intérieure (1a) de la partie de coque (1), qui s'étend le long d'un bord périphérique (11) de la partie de coque (1) et fait saillie au-delà de celui-ci.

9. Elément de fuselage (100) selon l'une des revendications précédentes, comprenant en outre:
une structure de couplage de profilé (9) reliée à l'un des profilés de renforcement (21 ; 22), qui dépasse, par rapport à l'extension longitudinale du profilé de renforcement respectif (21 ; 22), d'une extrémité du profilé de renforcement respectif (21 ; 22).

10. Aéronef (200) comprenant un fuselage (210) comportant au moins un élément de fuselage (100) selon l'une des revendications précédentes.

11. Procédé de fabrication d'un élément de fuselage (100) comprenant les étapes de procédé suivantes:
Formation d'une structure de renforcement (2) à partir d'une pluralité de pièces moulées (3) en un matériau composite renforcé par des fibres, qui présentent chacune une section de base plane (30) et un bord profilé (31) en forme de gradin,
les bords de profil (31) de respectivement deux pièces moulées (3) étant disposés de manière à se chevaucher de telle sorte qu'ils forment un profil de renforcement (21 ; 22);
l'application d'une surface intérieure (1a) d'une partie de coque (1) s'étendant à plat en un matériau composite fibreux sur les parties de base (30) des parties moulées (3) de la structure de renforcement (2) ; et
Relier la partie de coque (1) et la structure de renforcement (2).

12. Procédé selon la revendication 11, dans lequel le bord profilé (31) s'étend sur tout le pourtour de la section de base (30), les pièces moulées (3) étant disposées sous la forme d'un parquetage de telle sorte que les bords profilés (31) se chevauchent et forment des profilés de renforcement (21, 22) qui se croisent en un point de croisement (20).

13. Procédé selon la revendication 12, dans lequel on relie à chaque profilé de renfort (21 ; 22) une bande de charge (4) respective qui s'étend au-delà de l'intersection (20).

14. Procédé selon la revendication 12 ou 13, dans lequel les sections de base (30) des pièces moulées (3) sont de forme rectangulaire, le bord profilé (31) présentant deux premières sections de profil (32) opposées l'une à l'autre, qui s'étendent dans une première direction (R1), et deux deuxièmes sections de profil (33) opposées l'une à l'autre, qui s'étendent entre les premières sections de profil (32) dans une deuxième direction (R2), les premières sections de profil (32) de respectivement deux pièces moulées (3) étant disposées de manière à se chevaucher, de telle sorte qu'elles forment un premier profil de renforcement (21) s'étendant dans la première direction (R1), les deuxièmes sections de profil (33) de deux pièces moulées (3) respectives étant disposées en chevauchement de telle sorte qu'elles forment un deuxième profil de renforcement (22) s'étendant dans la deuxième direction (R2), qui croise le premier profilé de renforcement (21) au point d'intersection (20), et dans lequel, de préférence, des bandes de charge (4) en un matériau composite renforcé par des fibres, s'étendant respectivement sur les points d'intersection (20), sont reliées aux premiers sections de profil (32) et aux deuxièmes sections de profil (33).

15. Procédé selon l'une des revendications 11 à 14, dans lequel un noyau de mousse (6) est disposé entre les profilés de renfort (21 ; 22) et la partie de coque (1) pour soutenir la structure de renfort (2).

16. Procédé selon l'une des revendications 11 à 15, dans lequel les pièces moulées (3) sont disposées sous forme de produits semi-finis fibreux sur la partie de coque (1) et sont infiltrées avec un matériau de matrice après avoir été disposées.

17. Procédé selon l'une des revendications 11 à 15, dans lequel les pièces moulées (3) sont disposées sur la partie de coque (1) sous la forme de produits semi-finis en un matériau composite fibreux qui comprend des fibres de renfort noyées dans un matériau de matrice.
